# FASCICULE DE BREVET EUROPEEN

(11) **EP 3 812 857 B1**
(45) Date de publication et mention de la délivrance du brevet: **30.11.2022**
(21) Numéro de dépôt: 20306256.7
(22) Date de dépôt: 21.10.2020
(51) Int. Cl.: G05B 19/042, G06F 13/42, G06F 12/06

(54) **ATTRIBUTION AUTOMATIQUE D'ADRESSES PHYSIQUES ET DETERMINATION D'UNE POSITION RELATIVE D'UNE PLURALITE DE CALCULATEURS PERIPHERIQUES EN RESEAU**
AUTOMATISCHE ZUWEISUNG VON PHYSISCHEN ADRESSEN UND RELATIVE BESTIMMUNG DER POSITION EINER VIELZAHL VON VERNETZTEN PERIPHEREN RECHNERN
AUTOMATIC ALLOCATION OF PHYSICAL ADDRESSES AND DETERMINATION OF A RELATIVE POSITION OF A PLURALITY OF NETWORKED PERIPHERAL COMPUTERS

(30) Priorité: 25.10.2019 FR 1911951
(43) Date de publication de la demande: 28.04.2021
(73) Titulaire: SC OPTIMA, 62620 Ruitz (FR)
(72) Inventeur: Houssard, Olivier, 62232 Fouquières-les-Béthune (FR)
(74) Mandataire: RVDB

(56) Documents cités:
- US-A1- 2010 280 786
- US-A1- 2017 046 292
- US-A1- 2018 375 738

## Description

### Domaine technique

La présente invention concerne le domaine de l'électronique et plus particulièrement le domaine des systèmes dits modulaires de calculateurs comprenant un calculateur central connecté à une pluralité de calculateurs périphériques en réseau.

Un des objets de la présente invention vise à proposer une procédure d'attribution automatique d'adresses physiques permettant de déterminer physiquement la position relative de calculateurs périphériques connectés entre eux en réseau.

La présente invention trouvera des applications avantageuses dans le domaine des systèmes temps réel comprenant des calculateurs périphériques qui sont reliés en réseau deux à deux à un calculateur central et qui doivent être interchangeables et localisables géographiquement les uns par rapport aux autres.

La présente invention trouvera ainsi de façon non-exclusive des applications avantageuses dans le domaine agricole notamment en s'intégrant dans les systèmes de calculateurs pour véhicule d'épandage afin de piloter de façon indépendante les sorties des buses de pulvérisation d'un pulvérisateur, ou d'autres types de modules tels que des vannes, des sondes, etc.

### Etat de l'art

Un pulvérisateur comporte généralement un contenant qui contient un liquide ou une poudre à pulvériser, une pompe, un distributeur et une ou plusieurs buses de pulvérisation. Certains pulvérisateurs comportent également un régulateur de pression et un manomètre pour réguler le débit de pulvérisation.

Dans le domaine de l'agriculture, on connaît des pulvérisateurs qui intègrent un système électronique de pilotage permettant de piloter de façon indépendante les différentes sorties de l'ensemble des buses.

De tels pulvérisateurs sont destinés à pulvériser des produits sur les cultures sous forme de poudre ou de liquide ; ils peuvent être utilisés par exemple pour appliquer sur les cultures des engrais foliaires, pour désherber ou encore pour traiter les cultures contre certaines maladies et/ou lutter contre certains insectes (insectes, acariens, etc.) qui sont susceptibles de nuire à la récolte.

### De tels pulvérisateurs peuvent équiper un véhicule motorisé de type par exemple tracteur, automoteur ou encore aéronef (autonome ou non)

On retrouve par exemple parmi ces applications les véhicules d'épandage.

Dans ce type d'application, le pulvérisateur comprend en généralité une pluralité de buses de pulvérisation pilotées via un calculateur central par une pluralité de calculateurs périphériques connectées en réseau deux à deux.

On connaît dans le domaine de l'agriculture des véhicules d'épandage mettant en œuvre un système de pulvérisateur composé d'une rampe articulée à l'arrière (ou à l'avant) du véhicule. Or, une telle rampe peut faire plusieurs dizaines de mètres de large et les buses de pulvérisation peuvent être fixées sur la rampe environ tous les cinquante centimètres, voire tous les vingt-cinq centimètres.

Prenons à titre d'exemple, un véhicule d'épandage comprenant une rampe de quarante-huit mètres de large avec une buse fixée tous les cinquante centimètres.

Dans cet exemple qui est purement illustratif et ne présente en aucun cas un caractère limitatif, il est donc nécessaire de piloter simultanément et de façon indépendante quatre-vingt-seize buses, chaque buse étant reliée à l'une des huit sorties d'un des douze calculateurs. Ainsi, dans cet exemple, le calculateur central doit pouvoir piloter en temps réel et de façon indépendante les quatre-vingt-seize buses de la rampe.

On comprend par cet exemple que la puissance de traitement du calculateur central est étroitement liée au nombre de buses à piloter : le calculateur central peut saturer si la puissance de traitement de ce dernier n'est pas correctement dimensionnée.

Pour pallier ce problème de saturation, les systèmes actuels présentent de plus en plus une architecture en réseau de manière à ce que l'intelligence et le traitement de l'information soient déportés au moins en partie du calculateur central vers des calculateurs périphériques. Un des avantages de l'architecture en réseau est qu'une augmentation du volume d'informations transitant dans le réseau ne remet pas en cause l'architecture complète du système : il suffit en effet d'ajouter au réseau un ou plusieurs calculateurs périphériques pour absorber la surcharge.

Cette solution implique toutefois que le dialogue entre les calculateurs périphériques et le calculateur central soient simples et nécessite un câblage simple afin d'éviter que la complexité du réseau augmente de manière trop importante avec le nombre de calculateurs du réseau.

Or, la mise en œuvre d'un réseau de calculateurs périphériques connectés à un calculateur central nécessite de vraies compétences techniques pour configurer correctement le câblage du réseau et pour gérer les adresses respectives attribuées à chacun des calculateurs périphériques connectés au réseau.

L'ensemble de ces problématiques est décrit dans le document FR 2 856 164 B1 qui concerne une application de tels systèmes dans le domaine des semoirs.

Le Demandeur soumet que la solution proposée dans ce document présente toutefois des inconvénients qui rendent la solution peu flexible et peu adaptable.

En effet, le document FR 2 856 164 B1 propose une architecture électronique de calculateurs périphériques qui ne présentent chacun qu'une seule ligne de bus, ce qui nécessite notamment des configurations différentes selon le câblage du réseau.

Pour un câblage en T du calculateur central avec le réseau de calculateurs périphériques (figures 5 et 6 du document FR 2 856 164 B1), il est requis un mode de réalisation de calculateur ayant une architecture électronique conforme à la figure 7 de ce même document avec de nombreux fils.

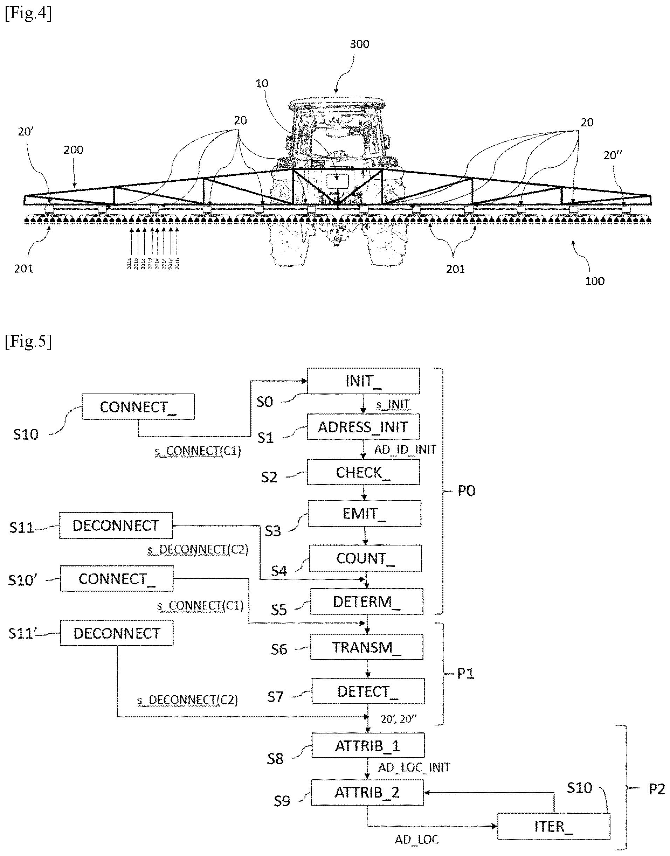

Pour un câblage du calculateur central connecté en bout de chaîne avec le réseau de calculateur périphériques (figure 4 du document FR 2 856 164 B1), il est requis un autre mode de réalisation de calculateur ayant une autre architecture électronique ne présentant qu'une ligne de bus conformément à la figure 8 de ce même document.

On comprend donc que l'architecture électronique du calculateur périphérique proposée dans ce document ne permet pas au calculateur central de se connecter n'importe où sur le réseau de calculateurs.

En effet, dans ce document FR 2 856 164 B1, la position du calculateur central dans le réseau de calculateurs périphériques conditionne le type de calculateur à utiliser, ce qui notamment complexifie le câblage, implique un coût de production significatif et ne permet pas au système d'évoluer.

On connaît également le document US 2018/375738 A1 qui divulgue un procédé de détermination d'une position relative d'une pluralité de calculateurs connectés en réseau. En revanche, le procédé nécessite beaucoup de ressources informatiques et ne se fait pas en temps réel.

Le Demandeur soumet que, pour ces raisons, les techniques développées jusqu'à présent pour déterminer la position relative des calculateurs dans un réseau ne sont pas pleinement satisfaisantes.

### Résumé et objet de la présente invention

### La présente invention vise à améliorer la situation décrite ci-dessus

La présente invention vise notamment à remédier à au moins un des différents problèmes techniques mentionnés ci-dessus en proposant une solution pour déterminer une position relative d'une pluralité de calculateurs périphériques connectés en réseau deux à deux quelle que soit la position du calculateur central.

L'objet de la présente invention concerne selon un premier aspect un procédé selon la revendication 1 de détermination d'une position relative d'une pluralité de calculateurs périphériques comprenant chacun une entrée et une sortie, les calculateurs périphériques étant ici connectés en réseau deux à deux selon leur entrée et leur sortie respectives, l'ensemble des calculateurs périphériques étant connectés à un calculateur central.

Selon la présente invention, chaque calculateur périphérique comprend avantageusement :
- une puce électronique programmable comprenant des moyens de mémorisation aptes à stocker une adresse d'identification contenant au moins une information relative à un identifiant du calculateur périphérique ;
- une première ligne de bus connectée à l'entrée du calculateur périphérique et reliée à la puce électronique ;
- une deuxième ligne de bus connectée à une sortie du calculateur périphérique et reliée à la puce électronique ;
- un relais d'interconnexion agencé entre les première et deuxième lignes de bus, le relais électroniquement étant commandable par la puce et étant configuré pour présenter deux configurations dont :
   a) une première configuration dite d'interconnexion dans laquelle les première et deuxième lignes de bus sont connectées entre elles formant un bus commun interconnectant l'ensemble des calculateurs périphériques ; et
   b) une deuxième configuration dite de déconnexion dans laquelle les première et deuxième lignes de bus sont déconnectées entre elles de manière à ce que les première et deuxième lignes de bus soient indépendantes l'une de l'autre.

On comprend ici qu'en configuration de connexion les calculateurs peuvent communiquer ensemble sur le bus commun. En configuration de déconnexion un calculateur ne peut communiquer qu'avec son ou ses voisins directs ; c'est-à-dire avec le calculateur qui est en amont et/ou le calculateur qui est en aval dans la chaîne d'interconnexion. Avantageusement, le procédé selon la présente invention comporte une phase d'identification de voisinage.

Cette phase comprend notamment les étapes suivantes :
- une étape de détermination au cours de laquelle, en configuration de déconnexion, la puce électronique de chaque calculateur périphérique interroge le calculateur périphérique en amont et/ou en aval via respectivement les première et/ou deuxième lignes de bus pour récupérer et stocker dans les moyens de mémorisation l'adresse d'identification des calculateurs périphériques en amont et/ou en aval en tant qu'information de voisinage ;
- après un laps de temps déterminé, une étape de détection au cours de laquelle les puces électroniques desdits calculateurs périphériques traitent l'information de voisinage afin de détecter au moins un calculateur périphérique de bout de chaîne.

Avantageusement, le procédé selon la présente invention comporte en outre une phase d'adressage physique.

Ladite phase comprend notamment les étapes suivantes :
- une première étape d'attribution d'une adresse physique initiale prédéterminée à l'au moins un calculateur de bout de chaîne ;
- une deuxième étape d'attribution d'une adresse physique au calculateur en amont ou en aval du calculateur de bout de chaîne par incrémentation de l'adresse physique initiale ;
- une itération de la deuxième étape d'attribution au calculateur périphérique suivant de manière à attribuer une adresse physique à l'ensemble des calculateurs périphériques pour déterminer la position relative de chacun des calculateurs périphériques dans le réseau, lesdites adresses physiques de chacun des calculateur périphériques étant récupérées par le calculateur central à la fin de la procédure d'attribution.

Ainsi, grâce à cette succession d'étapes techniques, caractéristique de la présente invention, on dispose d'une procédure d'attribution d'adresses physique qui est unique et qui permet de déterminer avec précision la position relative des calculateurs périphériques, ceci quel que soit le type de réseau de calculateurs.

Une telle procédure d'attribution est mise en œuvre par l'intelligence embarquée dans la puce électronique de chaque calculateur périphérique et permet d'interroger en configuration de déconnexion le voisinage de chacun des calculateurs puis de repérer géographiquement les calculateurs périphériques les uns par rapport aux autres.

Cette procédure d'attribution d'adresse automatique est particulièrement appréciée afin notamment de pouvoir indiquer à l'opérateur en cas de défaillance quel est le calculateur périphérique concerné ou encore de piloter, de façon indépendante, avec précision et en temps réel, chacune des sorties des calculateurs périphériques.

Un calculateur central est connecté au réseau de calculateurs périphériques. On comprend ici qu'un tel calculateur central n'intervient pas dans procédure d'adressage physique. Un tel calculateur central récupère en effet les adresses physiques de chacun des calculateurs périphériques à la fin de la procédure d'attribution.

De préférence, l'adresse d'identification de chaque puce est un identifiant unique.

Dans un mode de réalisation avantageux, l'identifiant est un code binaire généré par ladite puce par exemple sur 32 bits ou 64 bits.

Dans un autre mode de réalisation avantageux, le procédé selon la présente invention comprend une phase préalable d'adressage provisoire.

De préférence, cette phase préalable d'adressage provisoire comprend une étape d'adressage provisoire au cours de laquelle chaque puce électronique génère une adresse d'identification provisoire et stocke cette adresse d'identification dans les moyens de mémorisation (on comprend ici que cette adresse d'identification provisoire contient ici au moins une information relative à un identifiant provisoire du calculateur).

De préférence, cette phase préalable d'adressage provisoire comprend en outre une étape d'émission au cours de laquelle, en configuration d'interconnexion, chaque puce envoie l'adresse d'identification provisoire générée à destination du calculateur central et/ou à destination de l'ensemble des autres calculateurs.

De préférence, la phase d'adressage préalable d'adressage comporte, après l'étape d'émission, une étape de recensement au cours de laquelle le calculateur central reçoit les adresses d'identification provisoires de chaque calculateur périphérique et détermine le nombre de calculateurs périphériques sur le réseau en décomptant le nombre d'adresses d'identification provisoires reçues.

Dans ce mode, on peut prévoir en outre que la phase préalable d'adressage provisoire comporte une étape d'initialisation au cours de laquelle le calculateur central émet sur le bus commun un signal d'initialisation à destination des puces électroniques de chacun des calculateurs périphériques du réseau, le signal d'initialisation comprenant des instructions pour initier la phase d'adressage provisoire automatique.

De préférence, l'étape d'adressage provisoire est suivie d'une étape de vérification au cours de laquelle, en configuration d'interconnexion, chaque calculateur périphérique interroge sur le bus commun les puces électroniques des calculateurs périphériques du réseau pour vérifier que l'adresse d'identification provisoire générée est unique.

Cette vérification se fait par exemple par comparaison des adresses d'identification provisoires.

Avantageusement, le procédé selon la présente invention comprend au moins une étape de déconnexion au cours de laquelle, pour chaque calculateur périphérique, la puce électronique émet à destination du relais un signal de déconnexion comprenant des instructions pour déconnecter les première et deuxième lignes de bus en configuration de déconnexion.

Avantageusement, le procédé selon la présente invention comprend une étape d'interconnexion au cours de laquelle, pour chaque calculateur périphérique, la puce électronique émet à destination du relais un signal d'interconnexion comprenant des instructions pour connecter les première et deuxième lignes de bus en configuration d'interconnexion.

Avantageusement, lors de l'étape de détection du bout de chaîne, les puces électroniques détectent l'au moins un calculateur périphérique de bout de chaîne en détectant le ou les calculateurs périphériques dont l'information de voisinage ne comprend qu'une unique adresse d'identification de calculateurs périphériques en amont ou en aval.

De préférence, on prévoit que, lors de la détection, les puces électroniques déterminent que le calculateur de bout de chaîne est :
- un calculateur de début de chaîne si le calculateur périphérique a reçu une adresse d'identification uniquement via la deuxième ligne de bus ; ou
- un calculateur de fin de chaîne si ledit calculateur périphérique a reçu une adresse d'identification uniquement via la première ligne de bus.

Avantageusement, la phase d'identification de voisinage comprend une étape de remontée de l'information de voisinage au cours de laquelle, en configuration d'interconnexion, chaque puce électronique transmet au calculateur central l'information de voisinage.

Selon un deuxième aspect, l'objet de la présente invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un troisième aspect, l'objet de la présente invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

L'objet de la présente invention concerne selon un quatrième aspect un système électronique 2. selon la revendication 13 de détermination d'une position relative d'une pluralité de calculateurs périphériques comprenant chacun une entrée et une sortie, lesdits calculateurs périphériques étant connectés en réseau deux à deux selon leur entrée et leur sortie respectives, le système électronique comprenant un calculateur central connecté à l'ensemble des calculateurs périphériques,

Avantageusement, le système selon la présente invention comporte des moyens configurés pour la mise en œuvre des étapes du procédé décrit ci-dessus.

Plus particulièrement, on prévoit un système dans lequel chaque calculateur périphérique comprend :
- une puce électronique programmable comprenant des moyens de mémorisation aptes à stocker une adresse d'identification contenant au moins une information relative à un identifiant du calculateur périphérique ;
- une première ligne de bus connectée à l'entrée du calculateur périphérique et reliée à la puce électronique ;
- une deuxième ligne de bus connectée à une sortie du calculateur périphérique et reliée à la puce électronique ;
- un relais d'interconnexion agencé entre la première et la deuxième lignes de bus, ledit relais électroniquement commandable par ladite puce étant configuré pour présenter deux configurations dont :
   a) une première configuration dite d'interconnexion dans laquelle les première et deuxième lignes de bus sont connectées entre elles formant un bus commun interconnectant entre eux l'ensemble des calculateurs périphériques ; et
   b) une deuxième configuration dite de déconnexion dans laquelle les première et deuxième lignes de bus sont déconnectées entre elles de manière à ce que lesdites première et deuxième lignes de bus soient indépendantes l'une de l'autre ;

Avantageusement, on prévoit en outre un système dans lequel la puce électronique de chaque calculateur périphérique comprend :
- des moyens d'interrogation configurés pour, en configuration de déconnexion, interroger le calculateur périphérique en amont et/ou en aval via respectivement la première et/ou la deuxième lignes de bus afin de récupérer et stocker dans les moyens de mémorisation l'adresse d'identification des calculateurs périphériques en amont et/ou en aval en tant qu'information de voisinage ; et
- des moyens de détection configurés pour traiter ladite l'information de voisinage afin de détecter au moins un calculateur de bout de chaîne.

De préférence, la puce électronique de chaque calculateur périphérique met en œuvre un algorithme d'adressage physique configurés pour en configuration de déconnexion :
- attribuer une adresse physique initiale prédéterminée à l'au moins un calculateur de bout de chaîne ;
- attribuer une adresse physique au calculateur en amont ou en aval du calculateur de bout de chaîne par incrémentation (par exemple un incrément de 1) de l'adresse physique initiale ; et
- réitérer l'attribution d'une adresse physique par incrémentation au calculateur périphérique suivant de manière à affecter une adresse physique à l'ensemble des calculateurs afin de déterminer une position relative de chacun des calculateurs dans le réseau, lesdites adresses physiques de chacun des calculateur périphériques étant récupérées par le calculateur central à la fin de la procédure d'attribution.

Avantageusement, le système selon la présente invention comporte un calculateur central connecté au réseau de calculateurs périphériques

Avantageusement, chaque calculateur périphérique comprend en entrée un connecteur d'entrée et en sortie un connecteur de sortie.

De préférence, les connecteurs d'entrée et de sortie sont configurés pour connecter le calculateur périphérique respectivement à un calculateur périphérique en amont dans la chaîne d'interconnexion et un calculateur périphérique en aval dans la chaîne d'interconnexion.

De préférence, chaque calculateur périphérique comporte deux fils reliant le connecteur d'entrée et le connecteur de sortie et alimentant la puce électronique du calculateur périphérique.

De préférence, la puce électronique de chaque calculateur périphérique est du type microprocesseur ou microcontrôleur.

De préférence, chaque calculateur périphérique comporte une résistance de bouclage configuré pour, en configuration de déconnexion, maintenir une impédance de ligne avec le calculateur en amont.

Avantageusement, le calculateur central est connecté au réseau de calculateurs périphériques selon un câblage en bout de réseau ou selon un câblage de type T.

Avantageusement, l'entrée ou la sortie de chaque calculateur de bout de chaîne non connecté à un autre calculateur périphérique est connecté à un bouchon de ligne pour adapter l'impédance de bus.

L'objet de la présente invention concerne selon un cinquième aspect un appareil électronique intégrant un système tel que décrit ci-dessus.

Dans une variante, l'appareil est un appareil du type pulvérisateur comprenant une pluralité de buses de pulvérisation pilotée via un calculateur central par une pluralité de calculateurs périphériques connectées en réseau deux à deux.

De préférence, la puce électronique de chaque calculateur périphérique comporte une pluralité de sorties, chaque sortie correspondant à une sortie de buse du pulvérisateur.

L'objet de la présente invention concerne selon un sixième aspect un véhicule motorisé, autonome ou non, embarquant un appareil tel que décrit ci-dessus.

De préférence, le véhicule est du type véhicule d'épandage.

Ainsi, par ses différentes caractéristiques techniques fonctionnelles et structurelles décrites ci-dessus, on met à disposition de l'industrie électronique et des systèmes modulaires de calculateurs un système et un protocole, efficaces et simples à mettre en œuvre, permettant d'attribuer des adresses physiques afin de localiser la position relative de chacun des calculateurs les uns par rapport aux autres, et ce quelle que soit la position du calculateur central dans le réseau de calculateurs périphériques.

### Brève description des figures annexées

D'autres caractéristiques et avantages de la présente invention ressortiront de la description ci-dessous, en référence aux figures annexées qui en illustrent un exemple de réalisation dépourvu de tout caractère limitatif et sur lesquelles :
[Fig. 1]

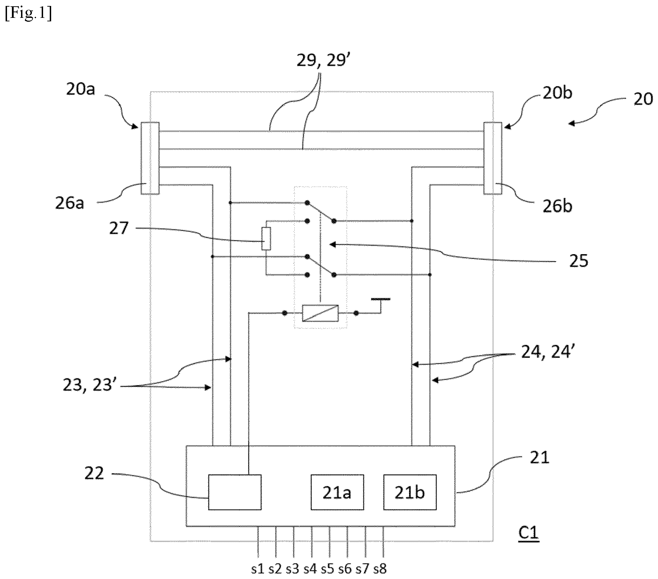

   La figure 1 est une vue schématique représentant un calculateur périphérique selon un exemple de réalisation de la présente invention ;
[Fig. 2]

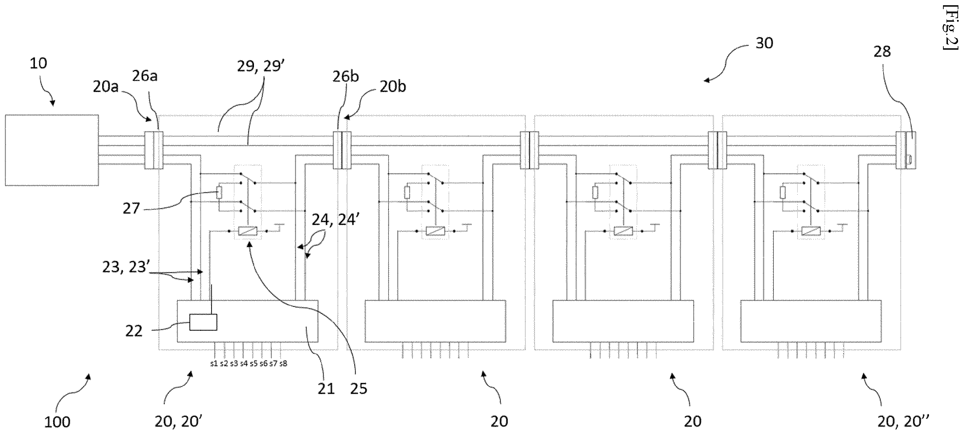

   La figure 2 est une vue schématique représentant un exemple de réalisation d'un système de calculateurs comprenant une chaîne d'interconnexion de plusieurs calculateurs périphériques en réseau deux à deux connectés en série de bout de chaîne avec un calculateur central ;
[Fig. 3]

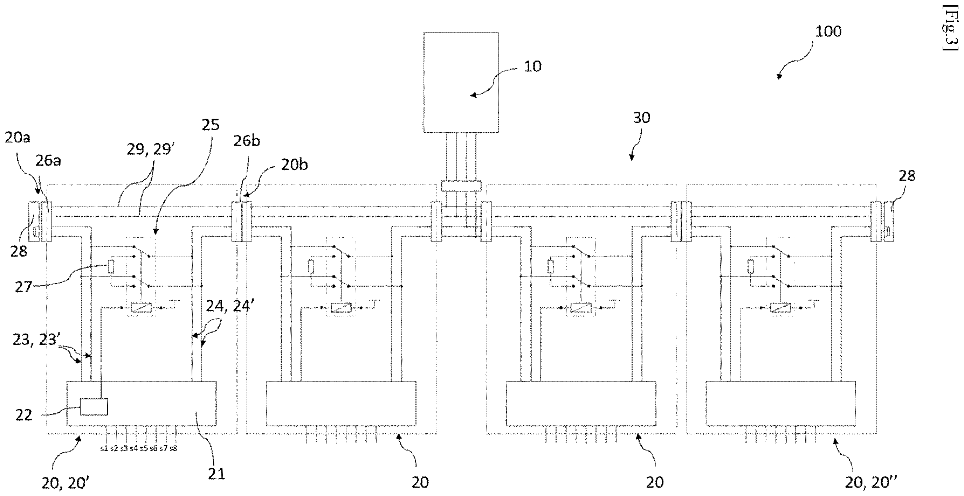

   La figure 3 est une vue schématique représentant un exemple de réalisation d'un système de calculateurs comprenant une chaîne d'interconnexion de plusieurs calculateurs périphériques en réseau deux à deux connectés selon un câblage en T avec un calculateur central ;
[Fig. 4]
   La figure 4 est une vue schématique représentant un exemple de réalisation d'un véhicule d'épandage comprenant un système de calculateurs selon un exemple de réalisation de la présente invention ;
[Fig. 5]

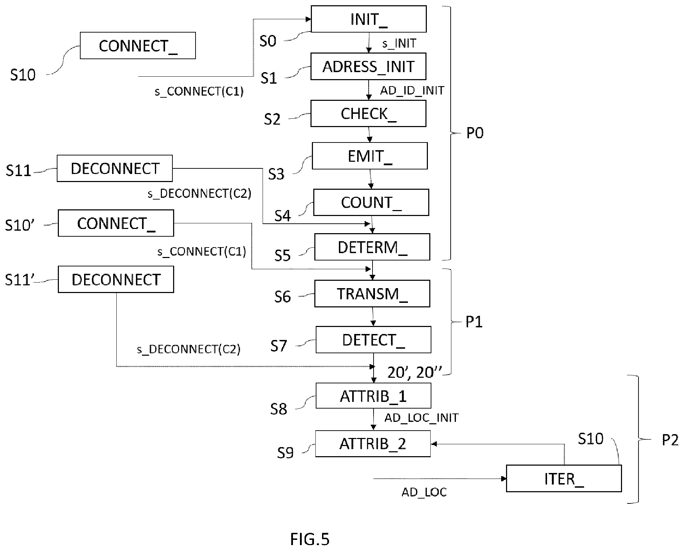

   La figure 5 est un organigramme représentant un exemple de réalisation d'un procédé de détermination des positions relatives des calculateurs périphériques dans un système selon la figure 2 ou 3.

### Description détaillée selon un exemple de réalisation avantageux

Un système modulaire de calculateurs comprenant des moyens pour déterminer la position relative des calculateurs entre eux ainsi que le procédé qui lui est associé vont maintenant être décrits dans ce qui va suivre en référence conjointement aux figures 1 à 5.

Pour rappel, un des objectifs de la présente consiste à déterminer la position relative des calculateurs dans un système modulaire de calculateurs comprenant une pluralité de calculateurs périphériques en réseau deux à deux, et ce quelle que soit le point de connexion du calculateur central sur le réseau (réseau en série ou réseau en T par exemple).

La présente invention consiste ainsi à proposer une architecture électronique pour calculateurs et la mise en œuvre d'une procédure permettant un adressage automatique des calculateurs 20 connectés sur un réseau 30 de calculateurs 20, un tel adressage permettant au calculateur central 10 du réseau 30, peu importe son point de connexion dans le réseau 30, d'identifier physiquement la position relative des calculateurs 20 les uns par rapport aux autres.

Ceci est rendu possible dans l'exemple qui va suivre grâce à la mise en œuvre des moyens décrits ci-dessous.

Dans l'exemple décrit ici et comme illustré notamment en figure 1, on dispose d'un calculateur périphérique 20 comprenant en entrée 20a un connecteur d'entrée 26a et en sortie 20b un connecteur de sortie 26b.

Dans le réseau 30 de calculateurs 20, on comprend donc que les calculateurs voisins 20 sont connectés entre eux deux à deux selon respectivement leur connecteur d'entrée 26a et leur connecteur de sortie 26b respectifs.

Il forme ainsi une chaîne d'interconnexion.

L'ensemble de ces calculateurs 20 est relié à un calculateur central 10, soit par un câblage de type « en T » (figure 3), soit par un câblage de type « série » en bout de réseau (figure 2).

On notera que chaque calculateur 20 de début de réseau et de fin de réseau, non connecté à un calculateur, se voit connecté un bouchon de ligne 28 permettant l'adaptation d'impédance du bus.

Pour un câblage en T, on comprend donc qu'on prévoit deux bouchons de ligne 28 connectés respectivement au connecteur d'entrée 26a du calculateur de début de chaîne 20' et au connecteur de sortie du calculateur de fin de chaîne 20" comme en figure 3.

Pour un câblage en série, on retrouve un seul bouchon de ligne 28 connecté au connecteur de sortie du calculateur de fin de chaîne 20" comme en figure 2. On peut aussi prévoir une configuration différente avec un calculateur central 10 connecté au calculateur de fin de chaîne 20" avec un bouchon de ligne 28 connecté au connecteur d'entrée du calculateur de début de chaîne 20' (câblage non représenté ici).

Proposer une architecture électronique permettant la mise en œuvre d'une procédure d'adressage automatique quelle que soit la position du point de connexion du calculateur central avec le réseau 30 de calculateurs 20 (figure 2 ou figure 3) est un des objectifs de la présente invention.

A cet effet, on prévoit dans cet exemple que chaque calculateur 20 comporte :
- une ligne d'alimentation composée au minimum de deux fils d'alimentation 29 et 29' reliant le connecteur d'entrée 26a au connecteur de sortie 26b et alimentant le calculateur 20 ;
- une première ligne de bus 23-23' connectée à l'entrée 20a du calculateur 20 et reliée à la puce électronique 21 du calculateur ;
- une deuxième ligne de bus 24-24' connectée à la sortie 20b du calculateur 20 et reliée à la puce électronique 21 du calculateur ;
- un relais électronique 25 destiné à interconnecter les première 23-23' et/ou deuxième 24-24' lignes de bus via une signal de commande s_CONNECT ou s_DECONNECT provenant de la puce 21 ;
- une résistance de bouclage 27 de bus.

La présence de deux lignes de bus 23-23'et 24-24' avec un tel relais d'interconnexion 25 est caractéristique de la présente invention.

Comme expliqué en préambule de la description, il est souvent nécessaire dans les systèmes modulaires 100 de calculateurs que le calculateur central 10 ait une connaissance de la position relative des calculateurs périphériques 20 entre eux.

Une telle connaissance de la position relative des calculateurs 20 dans le réseau 30 de calculateurs peut servir au calculateur central 10 pour piloter de façon indépendantes les calculateurs périphériques 20 afin par exemple de contrôler les différentes sorties s1, s2, s3, s4, s5, s6, s7 et s8 de la puce 21 du calculateur 20. On notera qu'une telle fonctionnalité permet par exemple dans le domaine de l'épandage de contrôler de façon indépendante les différents calculateurs 20, associés à chacune des buses d'un pulvérisateur 200 sur un véhicule d'épandage 300 comme illustré en figure 4.

Une telle connaissance de la position relative des calculateurs 20 dans le réseau 30 de calculateurs permet également à l'opérateur de faciliter les opérations de maintenance en cas de remplacement, sans devoir reprogrammer un adressage comme dans les solutions existantes.

Un des objectifs de la présente invention est donc ici de proposer une procédure d'adressage physique remédiant aux inconvénients de l'état de la technique.

On prévoit ainsi dans le cadre de la présente invention une phase préalable d'adressage provisoire P0.

Lors du démarrage de cette phase P0, le système 100 est en configuration d'interconnexion C1. Cette configuration d'interconnexion C1 est une configuration dans laquelle les première 23-23' et deuxième 24-24' lignes de bus sont connectées entre elles et forment un bus interconnectant entre eux l'ensemble des calculateurs périphériques 20.

On parle aussi de bus commun à tous les calculateurs 20.

Cette configuration C1 correspond donc à la configuration de la figure 1 dans laquelle le relais 25 connecte les lignes de bus entre elles.

On peut prévoir ici une première étape d'interconnexion S10 au cours de laquelle la puce électronique 21 de chacun des calculateurs périphériques 20 émet à destination du relais 25 un signal d'interconnexion s_CONNECT comprenant des instructions pour connecter les première 23-23' et deuxième 24-24' lignes de bus en configuration d'interconnexion C1.

On peut aussi prévoir que, par défaut, les relais 25 au repos assurent une interconnexion entre les lignes de bus des calculateurs.

Une fois en configuration d'interconnexion C1, on prévoit lors de cette phase d'adressage provisoire P0 une étape d'initialisation S0 au cours de laquelle le calculateur central 10 émet sur le bus commun un signal d'initialisation s_INIT à destination des puces électroniques 21 de chacun des calculateurs périphériques 20 du réseau 30, ledit signal d'initialisation s INIT comprenant des instructions pour initier ladite phase d'adressage provisoire automatique P0. Cette étape S0 est déclenchée sur requête, par exemple à la suite d'un actionnement d'un bouton par l'opérateur pour initier la phase d'adressage provisoire. Alternativement, elle peut aussi se déclencher automatiquement, lors par exemple de la détection de remplacement de module

Chaque puce 21, après réception de ce signal s INIT génère lors d'une étape S1 une adresse d'identification provisoire AD_ID_INIT.

Cette adresse AD_ID_INIT qui contient une information d'identification du calculateur 20 est alors stockée dans les moyens de mémorisation 22 de la puce 21. Ces moyens de mémorisation 22 peuvent par exemple prendre la forme d'une mémoire volatile et/ou non volatile et/ou un dispositif de stockage mémoire qui peut comprendre de la mémoire volatile et/ou non volatile, telle que EEPROM, ROM, PROM, RAM, DRAM, SRAM, flash, ou autre. Dans l'exemple décrit ici, cette étape S1 est suivie d'une étape de vérification S2 permettant d'avoir pour chaque calculateur 20 une adresse d'identification provisoire AD_ID_INIT unique. Il est en effet préférable d'avoir une unique adresse pour chaque calculateur pour éviter les erreurs de localisation.

Ainsi, lors de cette étape S2, chaque calculateur périphérique 20 interroge sur le bus commun les puces électroniques 21 des autres calculateurs périphériques 20 du réseau 30 pour vérifier que l'adresse d'identification provisoire AD_IDINIT générée est unique.

Une telle vérification S2 peut se faire par exemple par comparaison des adresses entre elles. Après vérification S2, chaque puce 21 envoie lors d'une étape S3 l'adresse d'identification provisoire AD_ID_INIT générée sur le bus commun à destination du calculateur central 10. Le calculateur central 10 reçoit donc une liste d'adresses d'identification contenant l'ensemble des adresses d'identification générées pour l'ensemble des calculateurs 20.

Le calculateur central 10 enregistre ces adresses en tant qu'adresses d'identification AD_ID sur des moyens de mémorisation (non représentés ici). Comme précédemment, ces moyens de mémorisation peuvent prendre la forme par exemple d'une mémoire volatile et/ou non volatile et/ou un dispositif de stockage mémoire qui peut comprendre de la mémoire volatile et/ou non volatile, telle que EEPROM, ROM, PROM, RAM, DRAM, SRAM, flash, ou autre. Après réception de cette liste d'adresses d'identification, on peut considérer que le calculateur central 10 a une parfaite connaissance de l'identité de chacun des calculateurs 20 sur le réseau 30 ; en revanche, on note ici qu'il ne connaît pas la position relative de ces calculateurs 20 les uns par rapport aux autres.

On notera ici qu'on peut prévoir, après réception de cette liste, une étape optionnelle de recensement S4 qui permet au calculateur central 10 de déterminer le nombre de calculateurs périphériques 20 sur le réseau 30 en décomptant le nombre d'adresses d'identification provisoires AD_ID_INIT reçues.

Dans les exemples des figures 2 et 3, on recense quatre calculateurs 20 dans le réseau 30 ; on sait donc qu'il faut pour la suite localiser les quatre calculateurs les uns par rapport aux autres en leur attribuer les adresses physiques AD_LOC : « 1 », « 2 », « 3 » et « 4 » par exemple. L'homme du métier comprendra ici que la phase P0 reste optionnelle et qu'il est possible d'envisager une alternative dans laquelle la puce 21 détient déjà une adresse d'identification unique AD_ID.

Une telle adresse peut par exemple être un identifiant prenant la forme d'un code binaire codé sur trente-deux ou soixante-quatre bits. On notera ici que ce code peut être considéré comme unique compte tenu de la très faible probabilité qu'un tel code soit généré deux fois.

On pourra tout de même prévoir la mise en œuvre d'une étape de vérification similaire à l'étape S2 ; une telle vérification demeure néanmoins inutile.

Dans une variante comme dans l'autre, le calculateur central 10 détient une connaissance de l'identité de chacun des calculateurs 20 sur le réseau.

La problématique réside ici dans la détermination de la position relative de chacun des calculateurs 20 les uns par rapport aux autres dans le réseau 30.

On prévoit donc ici une phase d'identification de voisinage P1 afin que chacun des calculateurs périphériques 20 ait une connaissance de son ou ses voisins.

Par voisin du calculateur 20 ici, on entend le calculateur qui est connecté en amont ou en aval dudit calculateur 20 via son connecteur d'entrée ou de sortie 26a-26b.

Ici, le calculateur 20 en amont d'un calculateur est le calculateur qui est connecté au connecteur de sortie 26b dudit calculateur. Il se situe en amont de celui-ci dans la chaîne d'interconnexion.

Inversement, le calculateur 20 en aval d'un calculateur est le calculateur qui est connecté au connecteur d'entrée 26a dudit calculateur. Il se situe en aval de celui-ci dans la chaîne d'interconnexion. Cette phase P1 requiert tout d'abord le passage en configuration de déconnexion C2.

La puce 21 de chacun des calculateurs 20 émet donc lors d'une première étape de déconnexion S11 un signal de déconnexion s_DECONNECT comprenant des instructions à destination du relais 25 pour déconnecter les première 23-23' et deuxième 24-24' lignes de bus en configuration de déconnexion C2.

En configuration de déconnexion C2, des moyens d'interrogation 21a de la puce 21, par exemple un circuit ou un sous-circuit électronique de la puce, sont configurés pour interroger le calculateur périphérique en amont et/ou en aval dudit calculateur via respectivement les première 23-23' et/ou deuxième 24-24' lignes de bus afin de récupérer et de stocker dans les moyens de mémorisation 22 l'adresse d'identification AD_ID des calculateurs périphériques en amont et/ou en aval.

Une fois récupérée, les adresses d'identification AD_ID des calculateurs périphériques en amont et/ou en aval sont enregistrées dans les moyens de mémorisation 22 de la puce 21 en tant qu'information de voisinage.

Après quelques secondes, voire quelques dixièmes de secondes, on peut considérer que chacun des calculateurs 20 du réseau 30 a eu le temps d'interroger ses voisins (les calculateurs en amont et/ou en aval) pour récupérer l'information de voisinage.

La connaissance de l'information de voisinage de chacun des calculateurs périphériques 20 est caractéristique de la présente invention.

Dans l'exemple décrit ici, les puces électroniques 21 de chacun des calculateurs comprennent des moyens de détection 21b pour traiter cette information de voisinage afin de détecter lors d'une étape S7 au moins un calculateur de bout de chaîne 20' et/ou 20".

Lors de cette étape de détection S7 du bout de chaîne, les moyens de détection 21b mettent en œuvre un algorithme de détection comprenant des instructions configurées pour déterminer l'au moins un calculateur périphérique de bout de chaîne 20'et/ou 20" en détectant le ou les calculateurs périphériques 20 dont l'information de voisinage ne comprend qu'une unique adresse d'identification AD_ID de calculateurs périphériques en amont ou en aval. L'algorithme repose sur la logique suivante : chaque calculateur 20 du réseau 30 se trouve potentiellement connecté à deux calculateurs 20 dans le réseau, à savoir respectivement un calculateur voisin unique par son connecteur d'entrée et sa première ligne de bus, et un calculateur voisin unique par son connecteur de sortie et sa deuxième ligne de bus.

Si l'un des calculateurs ne communique qu'avec un seul voisin en amont, via la deuxième ligne de bus, il est identifié comme étant le calculateur de début de chaine 20'.

Si l'un des calculateurs ne communique qu'avec un seul voisin en aval, via sa première ligne de bus, il est identifié comme étant le calculateur de fin de chaine 20".

Ainsi, l'algorithme de détection mis en œuvre au niveau de chacune des puces 21 est configuré pour déterminer que le calculateur de bout de chaîne 20' est un calculateur de début de chaîne si le calculateur périphérique 20 a reçu une adresse d'identification AD_ID de ses voisins uniquement via la deuxième ligne de bus 24-24'. De la même façon, l'algorithme de détection est configuré pour déterminer que le calculateur de bout de chaîne 20" est un calculateur de fin de chaîne si celui-ci a reçu de ses voisins une adresse d'identification AD_ID uniquement via la première ligne de bus 23-23'.

On comprend par exemple que, dans l'exemple de réalisation de la figure 2, l'algorithme de détection permet de détecter un calculateur de début de chaîne 20' et un calculateur de fin de chaîne 20".

Détecter les calculateurs de bout de chaîne 20' et/ou 20" est caractéristique de la présente invention et permet de passer à la phase d'adressage physique P2.

Optionnellement, on peut prévoir toujours en phase P1 une deuxième étape d'interconnexion S10' au cours de laquelle la puce électronique 21 de chacun des calculateurs périphériques 20 émet à destination du relais 25 un signal d'interconnexion s_CONNECT comprenant des instructions pour connecter les première 23-23' et deuxième 24-24' lignes de bus en configuration d'interconnexion C1.

L'interconnexion en configuration C1 peut aussi être mise en œuvre de manière à mettre le relais en position de repos, cette position au repos (illustrée en figure 1) permet une configuration C1. L'alimentation du relais permet le passage du relais en position active pour atteindre la configuration de déconnexion C2.

Suite à cette étape S10', la puce 21 de chacun des calculateurs transmet l'information de voisinage lors d'une étape S6 sur le bus commun à destination du calculateur central 10 afin que le calcul central 10 enregistre cette information de voisinage. Cette information peut alors être exploitée par le calculateur central 10 pour différentes fonctionnalités.

La phase P2 débute par une deuxième étape de déconnexion S11'.

Cette deuxième étape de déconnexion S11' comprend l'émission d'un signal de déconnexion s_DECONNECT comprenant des instructions à destination du relais 25 pour déconnecter les première 23-23' et deuxième 24-24' lignes de bus en configuration de déconnexion C2.

Si les relais 25 sont déjà déconnectés cette étape reste optionnelle.

En configuration de déconnexion C2, le système 100 prévoit la mise en œuvre des étapes suivantes :
- attribuer lors d'une étape S8 une adresse physique initiale AD_ID_INIT prédéterminée à l'au moins un calculateur de bout de chaîne 20' ;
- attribuer lors d'une étape S9 une adresse physique AD_ID pour le calculateur en amont ou en aval dudit calculateur de bout de chaîne 20' par incrémentation de l'adresse physique initiale AD_ID_INIT (par exemple une incrémentation de 1) ; et
- réitérer l'attribution par incrémentation d'une adresse physique AD_ID au calculateur périphérique 20 suivant de manière à attribuer une adresse physique AD_ID à l'ensemble des calculateurs périphériques 20 afin de déterminer une position relative de chacun des calculateurs périphériques 20 dans le réseau 30.

Ainsi, selon le nombre de calculateurs de bout de chaine 20' détectés à l'issue de la phase P1, chaque puce met en œuvre un algorithme permettant d'attribuer une adresse physique à chacun des calculateurs.

Dans l'exemple décrit ici, on prévoit, lors d'une étape S8, que la puce 21 du début de chaîne 20' attribue au calculateur de début de chaîne 20' une adresse physique égale à 1.

Le module calculateur de bout de chaine 20' prend ainsi l'adresse physique « 1 », puis la puce du calculateur 20 suivant dans la chaîne d'interconnexion (celui en amont) prend la suite de la procédure et attribue lors d'une étape S9 l'adresse « 2 » et ainsi de suite (étape S10) jusqu'au dernier calculateur de la chaîne d'interconnexion qui prend ici dans cet exemple l'adresse physique « 4 ».

Dans cet exemple, la phase d'adressage physique démarre à partir du calculateur de début de chaîne 20' qui est systématiquement celui qui n'a pas de voisin en aval ou celui qui est connecté en aval avec le calculateur central. Cette phase se poursuit en suite en cascade avec les calculateurs voisins de proche en proche dans la chaîne d'interconnexion.

Il est tout à fait envisageable d'implémenter l'algorithme selon une autre logique d'adressage démarrant par le calculateur de fin de chaîne 20".

A la fin de cette phase d'adressage physique P2, on connaît la position physique et chronologique de chaque calculateur périphérique 20 sur le réseau 30, depuis le calculateur « 1 » jusqu'au calculateur « 4 », ceci quel que soit le point de connexion du calculateur central 10 sur le réseau 30.

Ainsi, la présente invention permet une détermination élégante de l'adressage physique des calculateurs 20 sur un réseau quelle que soit le point de connexion du calculateur central.

Le demandeur observe que si l'on souhaite remplacer un seul calculateur 20 dans le chainage, au redémarrage du système, le calculateur central 10 détecte l'absence du calculateur 20 remplacé par la présence d'un nouveau module calculateur non adressé. Le calculateur central attribue à ce dernier automatiquement l'adresse du précèdent module calculateur remplacé. Dans le cas du remplacement de deux modules calculateurs ou plus, simultanément, une procédure d'adressage automatique est demandée par le calculateur central.

L'adressage physique proposée ici dans le cadre de la présente invention permet d'alléger les calculs du calculateur central en déportant l'intelligence dans les calculateurs périphériques.

L'architecture électronique proposée ici est par ailleurs unique et permet la mise en œuvre de la procédure d'adressage quelle que soit la position du point de connexion du calculateur central, ce qui présente des gains significatifs sur le plan industriel et sur le plan de la maintenance notamment.

On peut également prévoir un mode de réalisation non-décrit ici dans lequel le réseau comprend des calculateurs périphériques d'un autre type qui eux aussi sont connectés en série avec les calculateurs périphériques, chacun de ces autres calculateurs comprenant les mêmes caractéristiques et mettant en œuvre une même procédure d'adressage.

On comprend ainsi que ces autres calculateurs périphériques, notés B, comprennent donc une adresse d'identification contenant au moins une information relative à un identifiant de type calculateur B.

Les calculateurs 20 sont dans cet exemple de type A et présentent une information relative à un identifiant de type calculateur A.

Ceci revient donc à un réseau comprenant une série de calculateurs A et B connectés deux à deux. Bien évidemment, cet exemple peut s'étendre à plusieurs types de calculateurs électroniques dans le réseau.

Dans ce cas, on comprendra ici que la procédure d'attribution des adressages physiques peut se faire en tenant compte des identifiants A et B de chacune des entités dans le réseau.

La procédure d'attribution va donc déterminer la position relative de chacun des calculateurs A et B dans le réseau en fonction de leur type.

En d'autres termes, le premier calculateur de type A dans la chaîne d'interconnexion se fera attribuer l'adresse « 1 - A » et ainsi de suite («2 - A », « 3 - A », etc.) et le premier calculateur de type B dans la chaîne d'interconnexion se fera également attribuer l'adresse « 1 » avec l'identifiant de type B, c'est-à-dire « 1 - B » et ainsi de suite (« 2 - B », «3 - B », etc.

On comprend ici que cette logique d'attribution des adresses peut donc se faire en outre en tenant compte du type de calculateur dans la chaîne d'interconnexion. Cela revient à expliquer que les différentes étapes de la phase d'adressage physique sont réalisées en fonction de l'identifiant du calculateur périphérique, et plus précisément de l'information relative au type de calculateur contenant dans l'adresse d'identification de chacun des calculateurs.

Enfin, on notera que la présente invention peut se mettre en œuvre sur des bus de données mettant en œuvre des technologies de type BUS CAN, BUS RS232, BUS RS 485, Ethernet ou autres.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Procédé de détermination d'une position relative d'une pluralité de calculateurs périphériques (20) comprenant chacun une entrée (20a) et une sortie (20b), lesdits calculateurs périphériques (20) étant connectés en réseau (30) deux à deux selon leur entrée (20a) et leur sortie (20b) respectives, l'ensemble des calculateurs périphériques étant connectés à un calculateur central, chaque calculateur périphérique (20) comprenant :
- une puce électronique (21) programmable comprenant des moyens de mémorisation (22) aptes à stocker une adresse d'identification (AD_ID) contenant au moins une information relative à un identifiant dudit calculateur périphérique (20);
ledit procédé étant **caractérisé en ce que**
- une première ligne de bus (23, 23') connectée à l'entrée (20a) du calculateur périphérique (20) et reliée à ladite puce (21) ;
- une deuxième ligne de bus (24, 24') connectée à une sortie (20b) du calculateur périphérique (20) et reliée à ladite puce (21) ;
- un relais d'interconnexion (25) agencé entre les première (23, 23') et deuxième (24, 24') lignes de bus, ledit relais (25) électroniquement commandable par ladite puce (21) étant configuré pour présenter deux configurations (C1, C2) dont :
a) une première configuration (C1) dite d'interconnexion dans laquelle les première (23, 23') et la deuxième (24, 24') lignes de bus sont connectées entre elles formant un bus commun interconnectant l'ensemble des calculateurs périphériques (20) selon une chaîne d'interconnexion ; et
b) une deuxième configuration (C2) dite de déconnexion dans laquelle les première (23, 23') et la deuxième (24, 24') lignes de bus sont déconnectées entre elles de manière à ce que lesdites première (23, 23') et la deuxième (24, 24') lignes de bus soient indépendantes l'une de l'autre ;
dans lequel ledit procédé comporte une phase d'identification de voisinage (P1) présentant les étapes suivantes :
- une étape de détermination (S5) au cours de laquelle, en configuration de déconnexion (C2), la puce électronique (21) de chaque calculateur périphérique (20) interroge le calculateur périphérique en amont et/ou en aval via respectivement les première (23, 23') et/ou deuxième (24, 24') lignes de bus pour récupérer et stocker dans les moyens de mémorisation (22) l'adresse d'identification (ID) des calculateurs périphériques en amont et/ou en aval en tant qu'information de voisinage ; ledit calculateur en amont étant connecté à la sortie (20b) dudit calculateur périphérique (20) et étant situé en amont dudit calculateur périphérique (29) dans la chaîne d'interconnexion et ledit calculateur en aval étant connecté à l'entrée (20a) dudit calculateur périphérique (20) et étant situé en aval dudit calculateur périphérique (29) dans la chaîne d'interconnexion
- après un laps de temps déterminé, une étape de détection (S7) au cours de laquelle les puces électroniques (21) desdits calculateurs périphériques traitent l'information de voisinage afin de détecter au moins un calculateur périphérique de bout de chaîne (20', 20"), ledit au moins un calculateur périphérique de bout de chaîne (20', 20") étant un calculateur ne communiquant qu'avec un seul calculateur périphérique voisin en amont ou en aval de celui-ci dans la chaîne d'interconnexion ;
ledit procédé étant **caractérisé en ce qu'**il comporte une phase d'adressage physique (P2) présentant les étapes suivantes :
- une première étape d'attribution (S8) d'une adresse physique initiale (AD_LOC_INIT) prédéterminée à l'au moins un calculateur de bout de chaîne (20', 20") ; et
- une deuxième étape d'attribution (S9) d'une adresse physique (AD_LOC) au calculateur en amont ou en aval dudit calculateur de bout de chaîne (20', 20") par incrémentation de l'adresse physique initiale (AD _LOC_INIT) ;
- une itération (S10) de la deuxième étape d'attribution au calculateur périphérique (20) suivant de manière à attribuer une adresse physique (AD _LOC) à l'ensemble des calculateurs périphériques (20) pour déterminer la position relative de chacun des calculateurs périphériques (20) dans le réseau (30), lesdites adresses physiques de chacun des calculateur périphériques étant récupérées par le calculateur central à la fin de la procédure d'attribution.

2. Procédé selon la revendication 1, dans lequel l'adresse d'identification (AD_ID) de chaque puce (21) est un identifiant unique, de préférence ledit identifiant se présentant sous la forme d'un code binaire générée par ladite puce par exemple sur 32 bits ou 64 bits

3. Procédé selon la revendication 1, lequel comprend une phase préalable d'adressage provisoire (P0) comportant une étape d'adressage provisoire (S1) au cours de laquelle chaque puce électronique (21) génère une adresse d'identification provisoire (AD_ID_INIT) et stocke celle-ci dans les moyens de mémorisation (22).

4. Procédé selon la revendication 3, dans lequel la phase préalable d'adressage provisoire (P0) comporte une étape d'émission (S3) au cours de laquelle, en configuration d'interconnexion (C1), chaque puce (21) envoie l'adresse d'identification provisoire (AD_ID_INIT) générée à destination du calculateur central (10) connecté au réseau (30) de calculateurs périphériques (20).

5. Procédé selon la revendication 4, dans lequel ladite phase d'adressage provisoire (P0) comporte une étape de recensement (S4) au cours de laquelle le calculateur central (10), après réception des adresses d'identification provisoires (AD _ID_INIT) provenant de chaque calculateur périphérique (20), détermine le nombre de calculateurs périphériques (20) sur ledit réseau (30) en décomptant le nombre d'adresses d'identification provisoires (AD _ID_INIT) reçues.

6. Procédé selon l'une quelconque des revendications 4 ou 5, dans lequel ladite phase d'adressage provisoire (P0) comporte une étape d'initialisation (S0) au cours de laquelle le calculateur central (10) émet sur le bus commun un signal d'initialisation (sINIT) à destination des puces électroniques (21) de chacun des calculateurs périphériques (20) du réseau (30), ledit signal d'initialisation (s_INIT) comprenant des instructions pour initier ladite phase d'adressage provisoire automatique (P0).

7. Procédé selon l'une quelconque des revendications 3 à 6, dans lequel l'étape d'adressage provisoire (S1) est suivie d'une étape de vérification (S2) au cours de laquelle, en configuration d'interconnexion (C1), chaque calculateur périphérique (20) interroge sur le bus commun les puces électroniques (21) des calculateurs périphériques (20) du réseau (30) pour vérifier que l'adresse d'identification provisoire (AD_ID_INIT) générée est unique.

8. Procédé selon l'une quelconque des revendications précédentes, lequel comprend au moins une étape de déconnexion (S11, S11') au cours de laquelle, pour chaque calculateur périphérique (20), la puce électronique (21) émet à destination du relais (25) un signal de déconnexion (s DECONNECT) comprenant des instructions pour déconnecter les première (23, 23') et deuxième (24, 24') lignes de bus en configuration de déconnexion (C2).

9. Procédé selon l'une quelconque des revendications précédentes, lequel comprend au moins une étape d'interconnexion (S10, S10') au cours de laquelle, pour chaque calculateur périphérique (20), la puce électronique (21) émet à destination du relais (25) un signal d'interconnexion (s_CONNECT) comprenant des instructions pour connecter les première (23, 23') et/ou la deuxième (24, 24') lignes de bus en configuration d'interconnexion (C1).

10. Procédé selon l'une quelconque des revendications précédentes, dans lequel, lors de l'étape de détection (S7) du bout de chaîne, lesdites puces électroniques (21) détectent l'au moins un calculateur périphérique de bout de chaîne (20', 20") en détectant le ou les calculateurs périphériques (20) dont l'information de voisinage ne comprend qu'une unique adresse d'identification (AD_ID) de calculateurs périphériques en amont ou en aval, de préférence, lors de la détection (S7), lesdites puces électroniques (21) déterminent que le calculateur de bout de chaîne (20', 20") est :
- un calculateur de début de chaîne (20') si ledit calculateur périphérique (20) a reçu une adresse d'identification (AD_ID) uniquement via la deuxième ligne de bus (24, 24') ; et
- un calculateur de fin de chaîne (20") si ledit calculateur périphérique (20) a reçu une adresse d'identification (AD_ID) uniquement via la première ligne de bus (23, 23').

11. Programme d'ordinateur comportant des instructions adaptées pour l'exécution des étapes du procédé selon l'une quelconque des revendications 1 à 10 lorsque ledit programme d'ordinateur est exécuté par au moins un processeur.

12. Support d'enregistrement lisible par un ordinateur sur lequel est enregistré un programme d'ordinateur comprenant des instructions pour l'exécution des étapes du procédé selon l'une quelconque des revendications 1 à 10.

13. Système électronique de détermination (100) d'une position relative d'une pluralité de calculateurs périphériques (20) comprenant chacun une entrée (20a) et une sortie (20b), lesdits calculateurs périphériques (20) étant compris dans ledit système électronique et connectés en réseau (30) deux à deux selon leur entrée (20a) et leur sortie (20b) respectives, le système électronique comprenant un calculateur central connecté à l'ensemble des calculateurs périphériques, chaque calculateur périphérique (20) comprenant :
- une puce électronique programmable (21) comprenant des moyens de mémorisation (22) aptes à stocker une adresse d'identification (AD_ID) contenant au moins une information relative à un identifiant dudit calculateur périphérique (20) ; **caractérisé en ce que** chaque calculateur périphérique comprend:
- une première ligne de bus (23, 23') connectée à l'entrée (20a) du calculateur périphérique (20) et reliée à ladite puce (21) ;
- une deuxième ligne de bus (24, 24') connectée à une sortie (20b) du calculateur périphérique (20) et reliée à ladite puce (21) ;
- un relais d'interconnexion (25) agencé entre la première (23, 23') et la deuxième (24, 24') lignes de bus, ledit relais (25) électroniquement commandable par ladite puce (21) étant configuré pour présenter deux configurations (C1, C2) dont :
a) une première configuration (C1) dite d'interconnexion dans laquelle les première( 23, 23') et/ou la deuxième (24, 24') lignes de bus sont connectées entre elles formant un bus commun interconnectant l'ensemble des calculateurs périphériques (20) du réseau (30) selon une chaîne d'interconnexion ; et
b) une deuxième configuration (C2) dite de déconnexion dans laquelle les première (23, 23') et deuxième (24, 24') lignes de bus sont déconnectées entre elles de manière à ce que lesdites première (23, 23') et deuxième (24, 24') lignes de bus soient indépendantes l'une de l'autre ;
dans lequel la puce électronique (21) de chaque calculateur périphérique (20) comprend :
- des moyens d'interrogation (21a) configurés pour, en configuration de déconnexion (C2), interroger le calculateur périphérique en amont et/ou en aval via respectivement les première (23, 23') et/ou deuxième (24, 24') lignes de bus afin de récupérer et stocker dans les moyens de mémorisation (22) l'adresse d'identification (AD_ID) des calculateurs périphériques en amont et/ou en aval en tant qu'information de voisinage, ledit calculateur en amont dudit calculateur périphérique (20) étant connecté à la sortie (20b) dudit calculateur périphérique (20) et étant situé en amont dudit calculateur périphérique (29) dans la chaîne d'interconnexion et ledit calculateur en aval dudit calculateur périphérique (20) étant connecté à l'entrée (20a) dudit calculateur périphérique (20) et étant situé en aval dudit calculateur périphérique (20) dans la chaîne d'interconnexion ; et
- des moyens de détection (21b) configurés pour traiter ladite information de voisinage afin de détecter au moins un calculateur périphérique de bout de chaîne (20', 20"), ledit au moins un calculateur périphérique de bout de chaîne (20', 20") étant un calculateur ne communiquant qu'avec un seul calculateur périphérique voisin en amont ou en aval de celui-ci dans la chaîne d'interconnexion;
dans lequel la puce électronique (21) de chaque calculateur périphérique (20) met en œuvre un algorithme d'adressage physique configurés pour, en configuration de déconnexion (C2) :
- attribuer une adresse physique initiale (AD_ID_INIT) prédéterminée à l'au moins un calculateur de bout de chaîne (20', 20") ;
- attribuer une adresse physique (AD_ID) au calculateur en amont ou en aval dudit calculateur de bout de chaîne (20', 20") par incrémentation de l'adresse physique initiale (AD _ID_INIT) ; et
- réitérer l'attribution par incrémentation d'une adresse physique (AD_ID) au calculateur périphérique (20) suivant de manière à affecter une adresse physique (AD_ID) à l'ensemble des calculateurs périphériques (20) afin de déterminer une position relative de chacun des calculateurs périphériques (20) dans le réseau (30), lesdites adresses physiques de chacun des calculateur périphériques étant récupérées par le calculateur central à la fin de la procédure d'attribution.

14. Appareil électronique (200) intégrant un système (100) selon la revendication 13.

15. Véhicule motorisé (300) embarquant un appareil (200) selon la revendication 14, ledit véhicule étant de préférence du type véhicule d'épandage.

## Patentansprüche

1. Verfahren zur Bestimmung einer relativen Position einer Vielzahl von peripheren Rechnern (20), die jeweils einen Eingang (20a) und einen Ausgang (20b) umfassen, wobei die peripheren Rechner (20) gemäß ihrem jeweiligen Eingang (20a) und Ausgang (20b) zwei zu zwei als Netzwerk (30) verbunden sind, wobei die Gesamtheit der peripheren Rechner (20) mit einem zentralen Rechner verbunden ist, jeder periphere Rechner (20) umfassend:
- einen programmierbaren elektronischen Chip (21), der Speichermittel (22) umfasst, die zum Ablegen einer Identifikationsadresse (AD _ID) geeignet sind, die mindestens eine Information bezüglich eines Identifikators des peripheren Rechners (20) enthält;
wobei das Verfahren **dadurch gekennzeichnet ist, dass**:
- eine erste Busleitung (23, 23') mit dem Eingang (20a) des peripheren Rechners (20) verbunden und an den Chip (21) angeschlossen ist;
- eine zweite Busleitung (24, 24') mit einem Ausgang (20b) des peripheren Rechners (20) verbunden und an den Chip (21) angeschlossen ist;
- ein Verbindungsrelais (25) zwischen den ersten (23, 23') und den zweiten (24, 24') Busleitungen eingerichtet ist, wobei das durch den Chip (21) elektronisch steuerbare Relais (25) konfiguriert ist, um zwei Konfigurationen (C1, C2) aufzuweisen, die sind:
a) eine erste Konfiguration (C1), Verbindungskonfiguration genannt, wobei die ersten (23, 23') und die zweiten (24, 24') Busleitungen miteinander verbunden sind, um einen gemeinsamen Bus zu bilden, der die Gesamtheit der peripheren Rechner (20), in einer Verbindungskette vernetzt; und
b) eine zweite Trennkonfiguration (C2), wobei die ersten (23, 23') und die zweiten (24, 24') Busleitungen voneinander getrennt sind, so dass die ersten (23, 23') und die zweiten (24, 24') Busleitungen voneinander unabhängig sind;
wobei das Verfahren eine Phase der Nachbaridentifizierung (P1) beinhaltet, die die folgenden Schritte aufweist:
- einen Bestimmungsschritt (S5), wobei in der Trennkonfiguration (C2) der elektronische Chip (21) jedes peripheren Rechners (20) den vor- und/oder nachgeschalteten peripheren Rechner über die ersten (23, 23') beziehungsweise die zweiten (24, 24') Busleitungen abfragt, um in den Speichermitteln (22) die Identifikationsadresse (ID) der vor- und/oder nachgeschalteten peripheren Rechner als Nachbarinformation abzurufen und abzulegen; wobei der vorgeschaltete Rechner mit dem Ausgang (20b) des peripheren Rechners (20) verbunden ist und dem peripheren Rechner (29) in der Verbindungskette vorgeschaltet angeordnet ist, und der nachgeschaltete Rechner mit dem Eingang (20a) des peripheren Rechners (20) verbunden ist und dem peripheren Rechner (29) in der Verbindungskette nachgeschaltet angeordnet ist;
- nach einer bestimmten Zeitspanne, einen Erfassungsschritt (S7), wobei die elektronischen Chips (21) der peripheren Rechner die Nachbarinformation verarbeiten, um mindestens einen peripheren Rechner (20', 20") des Kettenendes zu erfassen, wobei der mindestens eine periphere Rechner (20', 20") des Kettenendes ein Rechner ist, der nur mit einem einzigen peripheren Rechner kommuniziert, der zu dem in der Verbindungskette vor- oder nachgeschalteten benachbart ist;
wobei das Verfahren ferner **dadurch gekennzeichnet ist, dass** es eine Phase der physischen Adressierung (P2) beinhaltet, die die folgenden Schritte aufweist:
- einen ersten Schritt der Zuweisung (S8) einer initialen physischen Adresse (AD_LOC_INIT), die dem mindestens einen Rechner des Kettenendes (20', 20") zubestimmt ist; und
- einen zweiten Schritt der Zuweisung (S9) einer physischen Adresse (AD_LOC) an den Rechner, der dem Rechner des Kettenendes (20', 20") vor- oder nachgeschaltet ist, durch Inkrementierung der initialen physischen Adresse (AD _LOC_INIT);
- eine Iteration (S10) des zweiten Schrittes der Zuweisung an den folgenden peripheren Rechner (20), um der Gesamtheit der peripheren Rechner (20) eine physische Adresse (AD _LOC) zuzuweisen, um die relative Position von jedem der peripheren Rechner (20) im Netzwerk (30) zu bestimmen, wobei die physischen Adressen von jedem der peripheren Rechner vom zentralen Rechner am Schluss der Zuweisungsprozedur abgerufen werden.

2. Verfahren nach Anspruch 1, wobei die Identifikationsadresse (AD_ID) jedes Chips (21) ein eindeutiger Identifikator ist, wobei der Identifikator vorzugsweise in Form eines Binärcodes vorliegt, der vom Chip erzeugt wird, beispielsweise mit 32 Bit oder 64 Bit.

3. Verfahren nach Anspruch 1, das eine vorangehende Phase der provisorischen Adressierung (P0) umfasst, einen provisorischen Adressierungsschritt (S1) beinhaltend, wobei jeder elektronische Chip (21) eine provisorische Identifikationsadresse (AD_ID_INIT) erzeugt und diese in den Speichermitteln (22) ablegt.

4. Verfahren nach Anspruch 3, wobei die vorangehende Phase der provisorischen Adressierung (P0) einen Emissionsschritt (S3) beinhaltet, wobei in der Verbindungskonfiguration (C1) jeder Chip (21) die erzeugte provisorische Identifikationsadresse (AD _ID_INIT) an den zentralen Rechner (10) sendet.

5. Verfahren nach Anspruch 4, wobei die provisorische Adressierungsphase (P0) einen Inventarisierungsschritt (S4) beinhaltet, wobei der zentrale Rechner (10), nach Erhalt der provisorischen Identifikationsadressen (AD _ID_INIT), die von jedem peripheren Rechner (20) stammen, die Anzahl der peripheren Rechner (20) im Netzwerk (30) durch Zählen der Anzahl der empfangenen provisorischen Identifikationsadressen (AD _ID_INIT) bestimmt.

6. Verfahren nach einem der Ansprüche 4 oder 5, wobei die provisorische Adressierungsphase (P0) einen Initialisierungsschritt (S0) beinhaltet, wobei der zentrale Rechner (10) auf dem gemeinsamen Bus ein Initialisierungssignal (s INIT) an die elektronischen Chips (21) von jedem der peripheren Rechner (20) des Netzwerks (30) emittiert, wobei das Initialisierungssignal (s_INIT) Anweisungen zum Initiieren der automatischen provisorischen Adressierungsphase (P0) umfasst.

7. Verfahren nach einem der Ansprüche 3 bis 6, wobei auf den provisorischen Adressierungsschritt (S1) ein Verifizierungsschritt (S2) folgt, wobei in der Verbindungskonfiguration (C1) jeder periphere Rechner (20) die elektronischen Chips (21) der peripheren Rechner (20) des Netzwerks (30) auf dem gemeinsamen Bus abfragt, um zu überprüfen, ob die erzeugte provisorische Identifikationsadresse (AD _ID_INIT) eindeutig ist.

8. Verfahren nach einem der vorhergehenden Ansprüche, das mindestens einen Trennschritt (S11, S11') umfasst, wobei der elektronische Chip (21) für jeden peripheren Rechner (20) ein Trennsignal (s DECONNECT) an das Relais (25) emittiert, das Anweisungen zum Trennen der ersten (23, 23') und zweiten (24, 24') Busleitungen in der Trennkonfiguration (C2) umfasst.

9. Verfahren nach einem der vorhergehenden Ansprüche, das mindestens einen Verbindungsschritt (S10, S10') umfasst, wobei der elektronische Chip (21) für jeden peripheren Rechner (20) ein Verbindungssignal (s_CONNECT) an das Relais (25) emittiert, das Anweisungen zum Verbinden der ersten (23, 23') und/oder der zweiten (24, 24') Busleitungen in der Verbindungskonfiguration (C1) umfasst.

10. Verfahren nach einem der vorhergehenden Ansprüche, wobei die elektronischen Chips (21) während des Erfassungsschritts (S7) des Kettenendes den mindestens einen peripheren Rechner (20', 20") des Kettenendes erfassen, indem sie den oder die peripheren Rechner (20) erfassen, dessen Nachbarinformation nur eine eindeutige Identifikationsadresse (AD_ID) von vor- oder nachgeschalteten peripheren Rechnern umfasst, vorzugsweise während der Erfassung (S7), wobei die elektronischen Chips (21) bestimmen, dass der Rechner des Kettenendes (20', 20") ist:
- ein Rechner des Kettenanfangs (20'), wenn der periphere Rechner (20) eine Identifikationsadresse (AD_ID) ausschließlich über die zweite Busleitung (24, 24') empfangen hat; und
- ein Rechner des Kettenschlusses (20"), wenn der periphere Rechner (20) eine Identifikationsadresse (AD _ID) ausschließlich über die erste Busleitung (23, 23') empfangen hat.

11. Computerprogramm, Anweisungen beinhaltend, die zur Ausführung der Verfahrensschritte nach einem der Ansprüche 1 bis 10 angepasst sind, wenn das Computerprogramm von mindestens einem Prozessor ausgeführt wird.

12. Computerlesbares Aufzeichnungsmedium, auf dem ein Computerprogramm aufgezeichnet ist, das Anweisungen zur Ausführung der Verfahrensschritte nach einem der Ansprüche 1 bis 10 umfasst.

13. Elektronisches System zur Bestimmung (100) einer relativen Position einer Vielzahl von peripheren Rechnern (20), die jeweils einen Eingang (20a) und einen Ausgang (20b) umfassen, wobei die peripheren Rechner (20), die im elektronischen System inbegriffen sind, einen zentralen Rechner umfassen, der mit der Gesamtheit der peripheren Rechner verbunden ist, wobei jeder periphere Rechner (20) umfasst:
- einen programmierbaren elektronischen Chip (21), Speichermittel (22) umfassend, die zum Ablegen einer Identifikationsadresse (AD_ID) geeignet sind, die mindestens eine Information bezüglich eines Identifikators des peripheren Rechners (20) enthält;
**dadurch gekennzeichnet, dass** jeder periphere Rechner (20) umfasst:
- eine erste Busleitung (23, 23'), die mit dem Eingang (20a) des peripheren Rechners (20) verbunden und an den Chip (21) angeschlossen ist;
- eine zweite Busleitung (24, 24'), die mit einem Ausgang (20b) des peripheren Rechners (20) verbunden und an den Chip (21) angeschlossen ist;
- ein Verbindungsrelais (25), das zwischen den ersten (23, 23') und den zweiten (24, 24') Busleitungen eingerichtet ist, wobei das durch den Chip (21) elektronisch steuerbare Relais (25) konfiguriert ist, um zwei Konfigurationen (C1, C2) aufweisen, die sind:
a) eine erste Verbindungskonfiguration (C1), wobei die ersten (23, 23') und/oder die zweiten (24, 24') Busleitungen miteinander verbunden sind, um einen gemeinsamen Bus zu bilden, der die Gesamtheit der peripheren Rechner (20) des Netzwerk (30) in einer Verbindungskette vernetzt; und
b) eine zweite Trennkonfiguration (C2), wobei die ersten (23, 23') und die zweiten (24, 24') Busleitungen voneinander getrennt sind, so dass die ersten (23, 23') und die zweiten (24, 24') Busleitungen voneinander unabhängig sind;
wobei der elektronische Chip (21) jedes peripheren Rechners (20) umfasst:
- Abfragemittel (21a), konfiguriert, um in der Trennkonfiguration (C2) den vor- und/oder nachgeschalteten peripheren Rechner über die ersten (23, 23') beziehungsweise die zweiten (24, 24') Busleitungen abzufragen, um in den Speichermitteln (22) die Identifikationsadresse (AD _ID) der vor- und/oder nachgeschalteten peripheren Rechner als Nachbarinformation abzurufen und abzulegen, wobei der Rechner, der dem peripheren Rechner (20) vorgeschaltet ist, mit dem Ausgang (20b) des peripheren Rechners (20) verbunden ist und dem peripheren Rechner (29) in der Verbindungskette vorgeschaltet angeordnet ist und der Rechner, der dem peripheren Rechner (20) nachgeschaltet ist, mit dem Eingang (20a) des peripheren Rechners (20) verbunden ist und dem peripheren Rechner (20) in der Verbindungskette nachgeschaltet angeordnet ist; und
- Erfassungsmittel (21b), konfiguriert, um die Nachbarinformation zu verarbeiten, um mindestens einen peripheren Rechner (20', 20") des Kettenendes zu erfassen, wobei der mindestens eine periphere Rechner (20', 20") des Kettenendes ein Rechner ist, der nur mit einem einzigen peripheren Rechner kommuniziert, der zu dem in der Verbindungskette vor- oder nachgeschalteten benachbart ist;
wobei der elektronische Chip (21) jedes peripheren Rechners (20) einen Algorithmus der physischen Adressierung implementiert, konfiguriert, zum, in der Trennkonfiguration (C2):
- Zuweisen einer initialen physischen Adresse (AD_ID_INIT), die dem mindestens einen Rechner des Kettenendes (20', 20") zubestimmt ist;
- Zuweisen einer physischen Adresse (AD_ID) an den Rechner, der dem Rechner (20', 20") des Kettenendes vor- oder nachgeschaltet ist, durch Inkrementierung der initialen physischen Adresse (AD_ID_INIT); und
- erneuten Iterieren der Zuweisung durch Inkrementierung einer physischen Adresse (AD_ID) an den folgenden peripheren Rechnern (20), um der Gesamtheit der peripheren Rechner (20) eine physische Adresse (AD_ID) zuzuteilen, um eine relative Position von jedem der peripheren Rechner (20) im Netzwerk (30) zu bestimmen, wobei die physischen Adressen von jedem der peripheren Rechner vom zentralen Rechner am Schluss der Zuweisungsprozedur abgerufen werden.

14. Elektronische Vorrichtung (200), die ein System (100) nach Anspruch 13 integriert.

15. Motorisiertes Fahrzeug (300), das eine Vorrichtung (200) nach Anspruch 14 aufnimmt, wobei das Fahrzeug vorzugsweise vom Typ Streufahrzeug ist.

## Claims

1. A method for determining a relative position of a plurality of peripheral computers (20) each comprising an input (20a) and an output (20b), said peripheral computers (20) being connected in a network (30) in pairs according to their respective input (20a) and output (20b), all peripheral computers (20) being connected to a central computer, each peripheral computer (20) comprising:
- a programmable electronic chip (21) comprising storage means (22) able to store an identification address (AD_ID) containing at least one piece of information relating to an identifier of said peripheral computer (20);
said method being **characterised in that**:
- a first bus line (23, 23') connected to the input (20a) of the peripheral computer (20) and connected to said chip (21);
- a second bus line (24, 24') connected to an output (20b) of the peripheral computer (20) and connected to said chip (21);
- an interconnection relay (25) arranged between the first (23, 23') and second (24, 24') bus lines, said relay (25) electronically controllable by said chip (21) being configured to have two configurations (C1, C2) including:
a) a first so-called interconnection configuration (C1) in which the first (23, 23') and second (24, 24') bus lines are connected together forming a common bus interconnecting all peripheral computers (20) according to an interconnection chain; and
b) a second so-called disconnection configuration (C2) in which the first (23, 23') and second (24, 24') bus lines are disconnected from each other so that said first (23, 23') and second (24, 24') bus lines are independent of each other;
wherein said method includes a neighbourhood identification phase (P1) having the following steps:
- a determination step (S5) during which, in the disconnection configuration (C2), the electronic chip (21) of each peripheral computer (20) interrogates the upstream and/or downstream peripheral computer respectively via the first (23, 23') and/or second (24, 24') bus lines to retrieve and store in the storage means (22) the identification address (ID) of the upstream and/or downstream peripheral computers as neighbourhood information; said upstream computer being connected to the output (20b) of said peripheral computer (20) and being located upstream of said peripheral computer (29) in the interconnection chain and said downstream computer being connected to the input (20a) of said peripheral computer (20) and being located downstream of said peripheral computer (29) in the interconnection chain;
- after a determined period of time, a detection step (S7) during which the electronic chips (21) of said peripheral computers process the neighbourhood information in order to detect at least one end-of-chain peripheral computer (20', 20"), said at least one end-of-chain peripheral computer (20', 20") being a computer communicating only with one single neighbouring peripheral computer upstream or downstream of the latter in the interconnection chain;
said method being further **characterised in that** it includes a physical addressing phase (P2) having the following steps:
- a first step of assigning (S8) a predetermined initial physical address (AD _LOC_INIT) to the at least one end-of-chain computer (20', 20"); and
- a second step of assigning (S9) a physical address (AD_LOC) to the computer upstream or downstream of said end-of-chain computer (20', 20") by incrementing the initial physical address (AD_LOC_INIT);
- an iteration (S10) of the second assignment step to the next peripheral computer (20) so as to assign a physical address (AD _LOC) to all peripheral computers (20) to determine the relative position of each of the peripheral computers (20) in the network (30), said physical addresses of each of the peripheral computers being retrieved by the central computer at the end of the assignment process.

2. The method according to claim 1, wherein the identification address (AD _ID) of each chip (21) is a unique identifier, preferably said identifier being in the form of a binary code generated by said chip for example over 32 bits or 64 bits.

3. The method according to claim 1, which comprises a prior temporary addressing phase (P0) including a temporary addressing step (S1) during which each electronic chip (21) generates a temporary identification address (AD_ID_INIT) and stores the latter in the storage means (22).

4. The method according to claim 3, wherein the preliminary temporary addressing phase (P0) includes an emission step (S3) during which, in the interconnection configuration (C1), each chip (21) sends the generated temporary identification address (AD_ID_INIT) to the central computer (10).

5. The method according to claim 4, wherein said temporary addressing phase (P0) includes a counting step (S4) during which the central computer (10), after receiving the temporary identification addresses (AD _ID_INIT) originating from each peripheral computer (20), determines the number of peripheral computers (20) on said network (30) by counting the number of received temporary identification addresses (AD _ID_INIT).

6. The method according to any one of claims 4 and 5, wherein said temporary addressing phase (P0) includes an initialisation step (S0) during which the central computer (10) emits on the common bus an initialisation signal (sINIT) to the electronic chips (21) of each of the peripheral computers (20) of the network (30), said initialisation signal (s_INIT) comprising instructions for initiating said automatic temporary addressing phase (P0).

7. The method according to any one of claims 3 to 6, wherein the temporary addressing step (S1) is followed by a verification step (S2) during which, in the interconnection configuration (C1), each peripheral computer (20) interrogates on the common bus the electronic chips (21) of the peripheral computers (20) of the network (30) to verify that the generated temporary identification address (AD ID INIT) is unique.

8. The method according to any one of the preceding claims, which comprises at least one disconnection step (S11, S11') during which, for each peripheral computer (20), the electronic chip (21) emits to the relay (25) a disconnection signal (s DECONNECT) comprising instructions for disconnecting the first (23, 23') and second (24, 24') bus lines in the disconnection configuration (C2).

9. The method according to any one of the preceding claims, which comprises at least one interconnection step (S10, S10') during which, for each peripheral computer (20), the electronic chip (21) emits to the relay (25) an interconnection signal (s_CONNECT) comprising instructions for connecting the first (23, 23') and/or the second (24, 24') bus lines in interconnection configuration (C1).

10. The method according to any one of the preceding claims, wherein, during the step of detecting (S7) the end of chain, said electronic chips (21) detect the at least one end-of-chain peripheral computer (20', 20") by detecting the peripheral computer(s) (20) whose neighbourhood information comprises only one single identification address (AD_ID) of upstream or downstream peripheral computers, preferably, during the detection (S7), said electronic chips (21) determine that the end-of-chain computer (20', 20") is:
- a start-of-chain computer (20') if said peripheral computer (20) has received an identification address (AD_ID) only via the second bus line (24, 24'); and
- an end-of-chain computer (20") if said peripheral computer (20) has received an identification address (AD ID) only via the first bus line (23, 23').

11. A computer program including instructions adapted for the execution of the steps of the method according to any one of claims 1 to 10 when said computer program is executed by at least one processor.

12. A computer-readable recording medium on which is recorded a computer program comprising instructions for the execution of the steps of the method according to any one of claims 1 to 10.

13. An electronic system (100) for determining a relative position of a plurality of peripheral computers (20) each comprising an input (20a) and an output (20b), said peripheral computers (20) being comprised within the electronic system comprising a central computer connected to all of the peripheral computers, each peripheral computer (20) comprising:
- a programmable electronic chip (21) comprising storage means (22) able to store an identification address (AD_ID) containing at least one piece of information relating to an identifier of said peripheral computer (20);
**characterised in that** each peripheral computer (20) comprises:
- a first bus line (23, 23') connected to the input (20a) of the peripheral computer (20) and connected to said chip (21);
- a second bus line (24, 24') connected to an output (20b) of the peripheral computer (20) and connected to said chip (21);
- an interconnection relay (25) arranged between the first (23, 23') and second (24, 24') bus lines, said relay (25) electronically controllable by said chip (21) being configured to have two configurations (C1, C2) including:
a) a first so-called interconnection configuration (C1) in which the first (23, 23') and/or the second (24, 24') bus lines are connected together forming a common bus interconnecting all peripheral computers (20) of the network (30) according to an interconnection chain; and
b) a second so-called disconnection configuration (C2) in which the first (23, 23') and second (24, 24') bus lines are disconnected from each other so that said first (23, 23') and second (24, 24') bus lines are independent of each other;
wherein the electronic chip (21) of each peripheral computer (20) comprises:
- interrogation means (21a) configured, in the disconnection configuration (C2), to interrogate the upstream and/or downstream peripheral computer respectively via the first (23, 23') and/or second (24, 24') bus lines in order to retrieve and store in the storage means (22) the identification address (AD_ID) of the upstream and/or downstream peripheral computers as neighbourhood information, said computer upstream of said peripheral computer (20) being connected to the output (20b) of said peripheral computer (20) and being located upstream of said peripheral computer (29) in the interconnection chain and said computer downstream of said peripheral computer (20) being connected to the input (20a) of said peripheral computer (20) and being located downstream of said peripheral computer (20) in the interconnection chain; and
- detection means (21b) configured to process said neighbourhood information in order to detect at least one end-of-chain peripheral computer (20', 20"), said at least one end-of-chain peripheral computer (20', 20") being a computer communicating only with one single neighbouring peripheral computer upstream or downstream of the latter in the interconnection chain;
wherein the electronic chip (21) of each peripheral computer (20) implements a physical addressing algorithm configured, in the disconnection configuration (C2), to:
- assign a predetermined initial physical address (AD _ID_INIT) to the at least one end-of-chain computer (20', 20");
- assign a physical address (AD _ID) to the computer upstream or downstream of said end-of-chain computer (20', 20") by incrementing the initial physical address (AD ID INIT); and
- reiterate the assignment by incrementing a physical address (AD _ID) to the next peripheral computer (20) so as to assign a physical address (AD _ID) to all peripheral computers (20) in order to determine a relative position of each of the peripheral computers (20) in the network (30), said physical addresses of each of the peripheral computers being retrieved by the central computer at the end of the assignment process.

14. An electronic apparatus (200) integrating a system (100) according to claim 13.

15. A motor-propelled vehicle (300) embedding an apparatus (200) according to claim 14, said vehicle preferably being of the spreading vehicle type.
